# EUROPÄISCHE PATENTSCHRIFT

(11) **EP 2 017 645 B1**
(45) Veröffentlichungstag und Bekanntmachung des Hinweises auf die Patenterteilung: **17.08.2016**
(21) Anmeldenummer: 08104170.9
(22) Anmeldetag: 30.05.2008
(51) Int. Cl.: G01S 7/40, G01S 13/93

(54) **Verfahren und Vorrichtung zur Zustandserkennung eines an einem Kraftfahrzeug angeordneten Abstandssensors**
Method and device for recognising the status of a distance sensor attached to a motor vehicle
Procédé et dispositif de reconnaissance de l'état d'un capteur de distance agencé sur un véhicule automobile

(30) Priorität: 16.07.2007 DE 102007032999
(43) Veröffentlichungstag der Anmeldung: 21.01.2009
(73) Patentinhaber: ROBERT BOSCH GMBH, 70442 Stuttgart (DE)
(72) Erfinder: Brichzin, Volker, 71634 Ludwigsburg (DE); Garcia Bordes, Maria-Eugenia, Jung-gu, Seoul 100-130 (KR); Schaut, Martin, 70499 Stuttgart (DE)

(56) Entgegenhaltungen:
- EP-A- 1 026 514
- EP-A- 1 681 583
- DE-A1- 19 945 250
- DE-A1- 19 963 001

## Beschreibung

Die Erfindung betrifft ein Verfahren und eine Vorrichtung zur Zustandserkennung eines an einem Kraftfahrzeug angeordneten Abstandssensors mit einem Prozessor und einem Speicher zur Abspeicherung von ersten Werten, die Wahrscheinlichkeiten für ein Vorhandensein von Objekten innerhalb eines Erfassungsbereiches des Abstandssensors repräsentieren, wobei sich die Wahrscheinlichkeiten aus Likelihood Quotienten ergeben, deren Zähler mit geschätzten Wahrscheinlichkeiten über ankommende Signale besetzt sind, die unter der Hypothese gemessen sind, dass reale Objekte vorhanden sind und deren Nenner mit weiteren geschätzten Wahrscheinlichkeiten über ankommende Signale besetzt sind, die unter der Hypothese gemessen sind, dass keine realen Objekte vorhanden sind, und einem Geschwindigkeitsregler, mittels dessen die Geschwindigkeit des Kraftfahrzeugs regelbar ist.

Abstandssensoren mit Geschwindigkeitsregler werden im Rahmen einer automatischen Geschwindigkeitsregelung eines Kraftfahrzeugs zur Erkennung vorausfahrender Kraftfahrzeuge eingesetzt. Die automatische Fahrgeschwindigkeitsregelung übernimmt die Geschwindigkeitsregelung des Kraftfahrzeugs derart, dass eine Soll-Geschwindigkeit eingeregelt wird, so lange die Umgebungsbedingungen dies zulassen. Die automatische Fahrgeschwindigkeitsregelung wird auch als adaptive Fahrgeschwindigkeitsregelung bezeichnet, die englische Übersetzung der adaptiven Fahrgeschwindigkeitsregelung lautet adaptive cruise control, abgekürzt ACC. Das ACC ist ein auf Radar oder Lidar basierendes Fahrerassistenzsystem, das automatisch einen geeigneten Abstand zum in einer eigenen Spur vorausfahrenden Kraftfahrzeug einhält. Dieses ausgewählte vorausfahrende Kraftfahrzeug wird als Ziel- oder Regelobjekt oder auch als Zielfahrzeug bezeichnet.

Der Abstandssensor ist unfähig, bei Blindheit vorausfahrende Kraftfahrzeuge sauber zu erkennen und zu verfolgen. Von daher ist eine vertrauenswürdige Erkennung dieser Blindheit und konsequenter Weise ein Abschalten des ACC unabdingbar. Um zu entscheiden, ob der Abstandssensor des ACC blind ist oder nicht, sind verschiedene Verfahren zur Erkennung der Blindheit bereits verwirklicht. Dies kann entweder auf Radarindikatoren oder auf eine Kombination von schlechten Wetterbedingungen und einer Verfolgungsleistung des vorausfahrenden Kraftfahrzeuges basieren.

Aus der DE 199 45 250 A1 sind ein Verfahren und eine Vorrichtung bekannt, bei denen Zumindest zwei Indikatoren werden gewichtet und derart verknüpft, werden, dass eine Aussage über einen wahrscheinlichen Zustand des Sensors erfolgen kann. Die Indikatoren werden aus von dem Sensor empfangenen oder ausgesendeten Signalen gebildet. Ein erster möglicher Indikator ist die mittlere Winkelgüte aller von dem System detektierten Objekte. Die Winkelgüte kann beispielsweise aus dem Quotienten von realem Objektwinkel und der Differenz aus realem und gemessenem Objektwinkel bestimmt werden. Ein weiterer möglicher Indikator ist die Objektstabilität, die die Rate von Detektionsausfällen des für die Kraftfahrzeuglängsregelung ausgewählten Ziel- beziehungsweise Regelobjekts beschreibt. Ein weiterer Indikator ist die mittlere Leistung der von dem Sensor empfangenen Signale. Wird von einem Sensor viel Leistung empfangen, so kann diese beispielsweise von einzelnen starken oder auch von vielen schwachen Zielen herrühren. Ein weiterer möglicher Indikator ist die Summe aller von dem System während einer Messung detektierten Objekte.

Aus der DE 199 63 001 A1 ist ein Kraftfahrzeug-Radarsystem mit einem sensorstrahlungsdurchlässigen Körper bekannt. Der Körper weist eine Anordnung aus elektrischen Leiterbahnen auf, die zum Heizen geeignet ist. Den elektrischen Leiterbahnen ist eine elektrische Leistung derart zuführbar, dass eine Oberflächentemperatur des Körpers bestimmte Temperaturwerte nicht überschreitet.

Der Erfindung liegt die Aufgabe zugrunde, ein einfaches Verfahren und eine einfache Vorrichtung zur Erkennung eines verschmutzten oder blinden Abstandssensors anzugeben.

Diese Aufgabe wird mit den Merkmalen der Hauptansprüche gelöst. Dabei sind folgende Verfahrensschritte angewandt: Aus ersten Werten, die Wahrscheinlichkeiten für ein Vorhandensein von Objekten innerhalb eines vorgebbaren Erfassungsteilbereiches des Abstandssensors repräsentieren, wird ein Maximum ermittelt, das Maximum wird mit einem ersten vorgebbaren Schwellwert verglichen und abhängig von dem Vergleich wird ein eine Blindheit anzeigendes Zustandsbit gesetzt.

Aus Radar- beziehungsweise Lidar-Rohdaten werden Positionen und Geschwindigkeiten von erfassten Objekten berechnet und abgespeichert. Die Objekte werden in Abtastzyklen des Radars beziehungsweise Lidars erfasst. Das Erfassen des Objektes wird auch als Detektion bezeichnet. Die Objekte werden nicht in jedem Abtastzyklus detektiert. Für die erfassten Objekte werden Detektionsraten und Wahrscheinlichkeiten für das Vorhandensein der Objekte abgespeichert. Die Detektionsrate ist ein Verhältniswert, der sich aus einer Anzahl der Detektionen eines Objektes zu einer Anzahl der insgesamt durchgeführten Abtastzyklen ergibt. Die Wahrscheinlichkeit für das Vorhandensein eines Objektes wird auch als Objekt-Existenzwahrscheinlichkeit oder als Wahrscheinlichkeit über das Vorhandensein eines Objektes bezeichnet und ergibt sich aus einem Likelihood-Quotienten. Der Likelihood-Quotienten Test ist ein statistischer Test, der zu Hypothesentests in parametrischen Modellen in der Mathematik gehört. Der Likelihood-Quotient gibt das Verhältnis zweier geschätzter Wahrscheinlichkeiten wieder und ist eine mathematische Wahrscheinlichkeit, dass zu einer Objekt Hypothese ein reales Objekt vorhanden ist. Der Zähler des Quotienten ist mit einer geschätzten Wahrscheinlichkeit über das ankommende Signal besetzt, das unter der Hypothese gemessen ist, das ein reales Objekt vorhanden ist. Der Nenner ist mit einer weiteren geschätzten Wahrscheinlichkeit über das ankommende Signal besetzt, das unter der Hypothese gemessen ist, dass kein reales Objekt vorhanden ist. Diese Objekt-Existenzwahrscheinlichkeit ist als Datenwert im Speicher hinterlegt.

Für jedes Objekt wird eine Objekt-Existenzwahrscheinlichkeit berechnet. Die Objekt-Existenzwahrscheinlichkeit wird auf 1 normiert und nachfolgend als Objekt-Existenzwahrscheinlichkeits-Indikator bezeichnet. Aus allen normierten Objekt-Existenzwahrscheinlichkeits-Indikatoren aller erfassten Objekte wird das Maximum ermittelt. Das Maximum aller Objekt-Existenzwahrscheinlichkeits-Indikatoren ist ein vertrauenswürdiger Wert, um zu wissen, ob irgendwelche Objekte vom Abstandssensor gesehen werden oder nicht. Wann immer der Gegenverkehr, Verkehrszeichen, Leitplanken oder andere Fahrzeuge und Objekte erkannt werden, wird das Maximum aller normierten Objekt-Existenzwahrscheinlichkeits-Indikatoren einen nahe zu 1 liegenden Wert haben. Liegt dieses Maximum nahe Null, so würde dies bedeuten, dass kein Verkehr und keine ortsfesten Objekte wie Leitpfosten oder Verkehrsschilder am Straßenrand vorhanden sind. Dies ist eher unwahrscheinlich. Von daher kann aufgrund eines nahe bei Null liegenden Maximums darauf geschlossen werden, dass der Abstandssensor aller Voraussicht nach vollständig blind ist.

In vorteilhafter Weise wird das Zustandsbit abhängig von einer eingeschalteten Linsenheizung oder einer Umgebungstemperatur gesetzt. Das Zustandsbit wird abhängig von dem Vergleich des Maximums mit dem ersten vorgebbaren Schwellwert und abhängig von der eingeschalteten Linsenheizung gesetzt. Unter extrem schlechten Wetterbedingungen, dass bedeutet niedrige Temperaturen und Schneefall, kann die optische Linse zumindest teilweise mit einer Eisschicht bedeckt sein, obwohl das Heizsystem der Linse aktiviert ist. Es wird keine Aussage darüber getroffen, ob die Linse nur teilweise oder gänzlich von der Eisschicht bedeckt ist. Von daher sind unterschiedliche Fallsituationen zu betrachten. Verbleibt in der Linsenmitte ein kleiner Teil der Linse eisfrei, so wird während einer Fahrt auf im wesentlichen gerader Strecke ein Zielfahrzeug des öfteren erfasst, sofern ein solches vorhanden ist. Das Phänomen der teilweise überfrorenen Linse führt zu einer schlechten Leistung des ACC, weil das verfolgte Objekt, das heißt das vorausfahrende Fahrzeug in der eigenen Spur nicht sauber detektiert werden kann. Aktuell wird das vorausfahrende Fahrzeug erkannt und zeitweise verloren oder überhaupt nicht mehr erkannt. Als Ergebnis davon und abhängig von der vorgegebenen und abgespeicherten Geschwindigkeit wird das ACC beschleunigen, solange das vorausfahrende Fahrzeug nicht detektiert wird und abgebremst, wenn es wieder erkannt wird. Offensichtlich ist dies ein ungewünschtes und unkomfortables Verhalten, das verhindert werden sollte. Ortsfeste Objekte am Straßenrand werden kaum erfasst. Die Linsenheizung wird idealerweise eingeschaltet, wenn die Umgebungstemperatur den Gefrierpunkt erreicht. In vorteilhafter Weise wird die Linsenheizung aktiviert, wenn die Umgebungstemperatur unter + 5 Grad Celsius sinkt.

Ist die Linsenheizung aktiv und werden keine Objekte ermittelt, so kann dieser Zustand mehrere Gründe haben. Eine erste Fallsituation ist darin zu sehen, dass die Linsenmitte eisfrei ist und kein Zielobjekt vorhanden ist. Eine zweite Fallsituation ist darin zu sehen, dass der Abstandssensor sauber ist und keine Objekte, also weder ortsfeste noch sich bewegende Objekte vorhanden sind. Solch eine Situation ist zum Beispiel in einem bevölkerungs- und verkehrsarmen Land wie Schweden möglich. Eine dritte Fallsituation ist darin zu sehen, dass der Abstandssensor völlig vereist ist und von daher weder ein Zielobjekt noch ortsfeste Objekte ermittelbar sind. Diese letzte genannte Situation ist bei eingeschalteter Linsenheizung am wahrscheinlichsten. Das Zustandsbit wird gesetzt.

In vorteilhafter Weise liegt der vorgebbare Erfassungsteilbereich in einem Abstand zwischen 60 und 300 Metern, in vorteilhafter Weise zwischen 80 und 250 Metern, insbesondere in einem Abstand von 100 und 200 Metern zum Kraftfahrzeug, das vom Abstandssensor geregelt ist. Damit ist berücksichtigt, dass Schmutzeffekte aufgrund von Strassenreflektionen, die bis zu einem Abstand von 60 Metern auftreten, unberücksichtigt bleiben.

In vorteilhafter Weise sind in dem Speicher erste Werte abgespeichert, die eine Wahrscheinlichkeit für ein Vorhandensein von Objekten innerhalb eines Erfassungsbereiches des Abstandssensors repräsentieren, und ein zweiter Wert, der eine Strecke ab dem Vergleich des Maximums mit dem ersten vorgebbaren Schwellwert repräsentiert. Der zweite Wert, der eine Strecke ab dem Vergleich des Maximums mit dem ersten vorgebbaren Schwellwert repräsentiert, wird zyklisch aktualisiert, der zyklisch aktualisierte zweite Wert, der eine Strecke ab dem Vergleich des Maximums mit dem ersten vorgebbaren Schwellwert repräsentiert, wird mit einem zweiten vorgebbaren Schwellwert verglichen und abhängig von den Vergleichen des Maximums mit dem ersten vorgebbaren Schwellwert und des zyklisch aktualisierten zweiten Wertes mit dem zweiten vorgebbaren Schwellwert wird ein eine Blindheit anzeigendes Zustandsbit gesetzt. Damit wird das Maximum über eine vorgebbare Streckenlänge ermittelt. Diese Filterung berücksichtigt eine vorgebbare Streckenlänge, die das geregelte Kraftfahrzeug zurücklegt, ehe das Zustandsbit gesetzt wird. Erst wenn innerhalb dieser vorgebbaren Strecke keine Objekte ermittelt worden sind, wird das Zustandsbit gesetzt. Die Strecke weist eine Länge zwischen 1.000 und 3.000 Meter, in vorteilhafter Weise eine Länge zwischen 1.500 und 2.500 Meter, insbesondere eine Länge von 2.000 Meter auf.

In vorteilhafter Weise wird das Maximum asynchron zeitgefiltert. In einem bevölkerungs- und verkehrsarmen Land wie Schweden wird oftmals über eine Streckenlänge von 2.000 Metern kein Objekt ermittelt. Vereinzelt sind Verkehrsschilder circa 2.000 Meter voneinander beabstandet. Das Maximum ist daher so gefiltert, dass die Existenzwahrscheinlichkeit schnell von 0 auf 1 steigt, aber langsam von 1 auf 0 sinkt. Von daher ist eine Strecke von 2000 Metern überbrückbar, ohne dass das Zustandsbit gesetzt wird und ohne dass ein entsprechender Warnhinweis an den Fahrzeugführer des Kraftfahrzeuges erfolgt.

Das Blindheits-Zustandsbit wird zurückgesetzt, wenn ein Zielobjekt wieder verfügbar ist, die Linsenheizung ausgeschaltet wird oder Rücksetzbedingungen bereits verwirklichter Verfahren zur Zustandserkennung eines Abstandssensors erfüllt sind. Diese letzten Bedingungen werden nur dann auftreten, wenn der ACC-Sensor fähig ist, wieder Objekte zu erkennen.

Die Schwellwerte sind in vorteilhafter Weise vorgebbar, so dass Eigenschaften des Kraftfahrzeugs, des Abstandssensors und des Kraftfahrzeugführers berücksichtigt werden können. Schwellwerte werden nachfolgend auch als Schwellen bezeichnet. Die englische Übersetzung für Zustandsbit lautet flag bit.

Zum besseren Verständnis der Erfindung ist nachfolgend ein Ausführungsbeispiel anhand der Zeichnung näher erläutert.

Es zeigen
- Fig. 1: einen Abstandsensor mit einer Eisschicht in Schnittdarstellung,
- Fig. 2: den Abstandssensor mit der Eisschicht in Draufsicht,
- Fig. 3: ein Kraftfahrzeug mit dem Abstandssensor auf einer Straße in Draufsicht und
- Fig. 4: ein Flussdiagramm.

In den verschiedenen Figuren sind ähnliche oder dieselben Elemente durch gleiche Bezugszeichen bezeichnet.

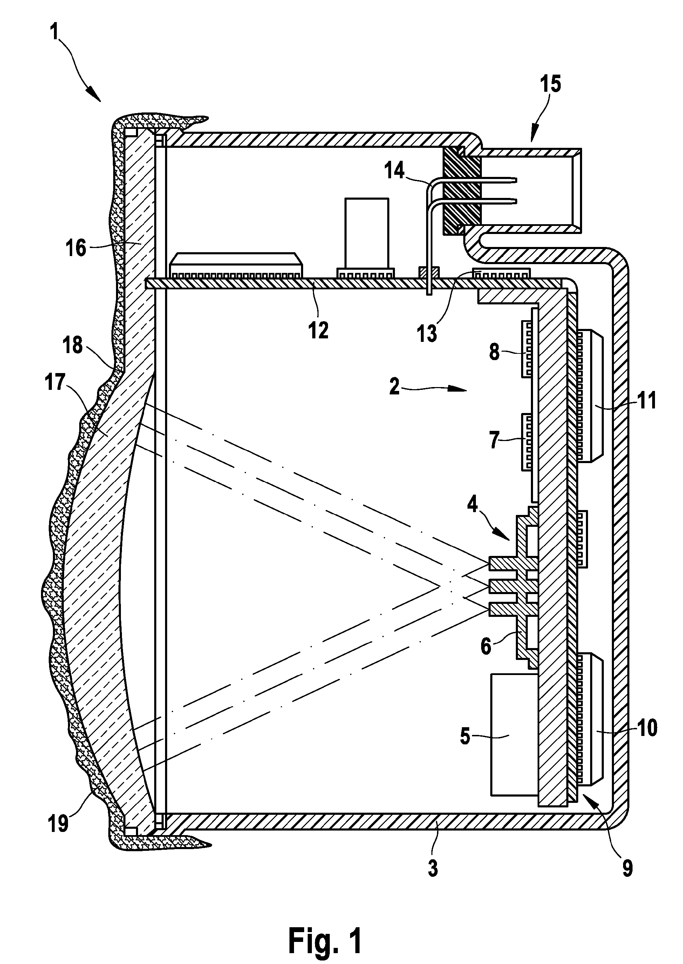

Figur 1 zeigt einen Abstandssensor 1 mit einer Vorrichtung 2 und einem Gehäuse 3. Die Vorrichtung 2 weist eine Radar-Sende-Empfangseinheit 4 mit einem Oszillatorblock 5, eine Strahlquelle 6 und weitere elektronische Bauteile 7 und 8, eine erste Leiterplatte 9 mit zumindest einem ersten Prozessor 10 und einem ersten Speicher 11 und eine zweite Leiterplatte 12 mit einem zweiten Prozessor 13 mit zumindest einem zweiten Speicher auf. In dem ersten Prozessor 10 werden Positionen und Geschwindigkeiten von erfassten Objekten berechnet und in dem Speicher 11 abgespeichert. Der zweite Prozessor 13 mit dem zweiten Speicher fungiert als Geschwindigkeitsregler. Von der zweiten Leiterplatte 12 führen elektrisch leitfähige Verbindungen 14 zu einer Steckverbindung 15. Das Gehäuse 3 weist eine Abdeckung 16 mit einer Linse 17 auf. Die Linse 17 weist einen Linsenrand 18 auf. Die Abdeckung 16 ist mit einer Eisschicht 19 bedeckt.

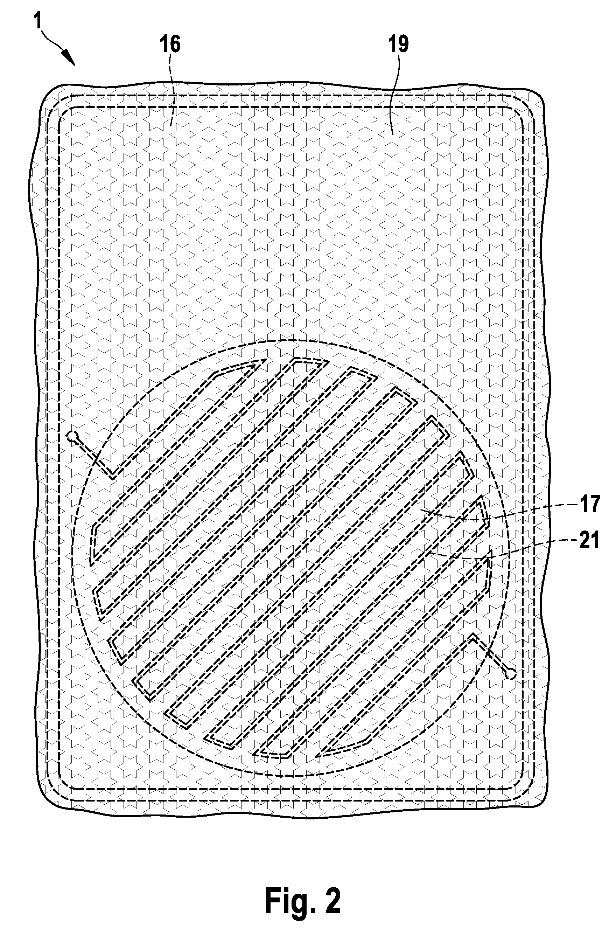

Figur 2 zeigt den mit der Eisschicht 19 bedeckten Abstandssensor 1, der die Linse 17 und eine Linsenheizung 21 aufweist. Die Linse 17 der Abdeckung 16 weist als Linsenheizung 21 einen Heizdraht auf. Die gesamte Abdeckung 16 und damit auch die Linse 17 sind von der Eisschicht 19 überzogen.

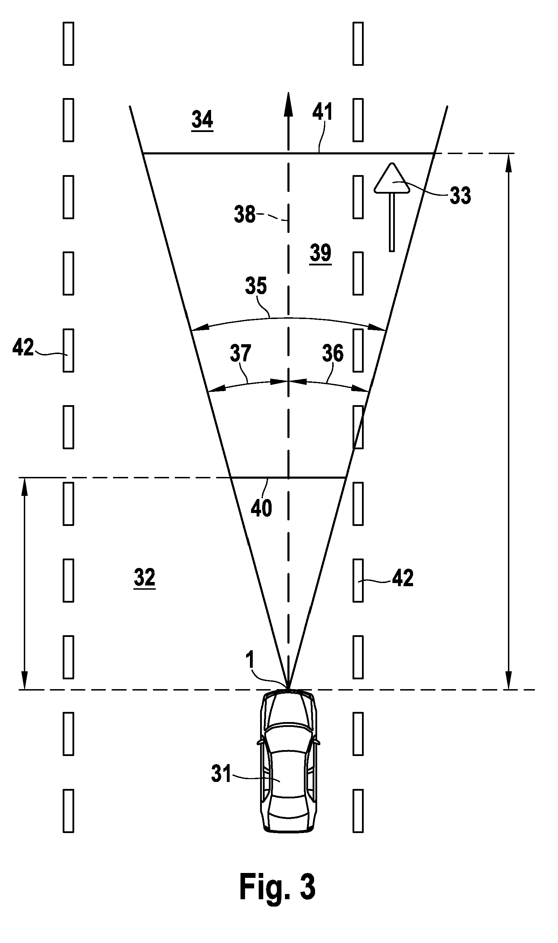

Figur 3 zeigt ein Kraftfahrzeug 31 mit dem Abstandssensor 1 auf einer Straße 32. Am Straßenrand ist ein Verkehrsschild 33 aufgestellt. Der Abstandssensor 1 sendet Strahlen aus, die sich parallel einer Fahrbahnebene der Straße 32 ausbreiten und das Verkehrsschild 33 bestrahlen. Das Verkehrsschild 33 reflektiert die Strahlung zurück in den Abstandssensor 1. Ein Erfassungsbereich 34 des sauberen Sensors 1 weist einen maximalen Öffnungswinkel 35 von insgesamt 16 Grad auf, das sind ein Halbwinkel 36 von 8 Grad nach rechts und ein Halbwinkel 37 von 8 Grad nach links gemessen bezüglich einer Fahrtrichtung 38. Das Verkehrsschild 33 befindet sich in einem trapezförmigen Erfassungsteilbereich 39, dessen parallele Grenzen 40 und 41 hundert und zweihundert Meter von dem geregelten Kraftfahrzeug 31 beabstandet sind. Ist der Abstandssensor 1 von einer Eisschicht 19 bedeckt, wird die Strahlung bei Durchdringung der Eisschicht 19 diffus. Das Verkehrsschild 33 ist nicht mehr sauber ermittelbar. Der normierte Objekt-Existenzwahrscheinlichkeits-Indikator für das Vorhandensein des Verkehrsschildes 33 sinkt unter 0,1. Die Straße 32 ist mittels Fahrbahnmarkierungen 42 begrenzt.

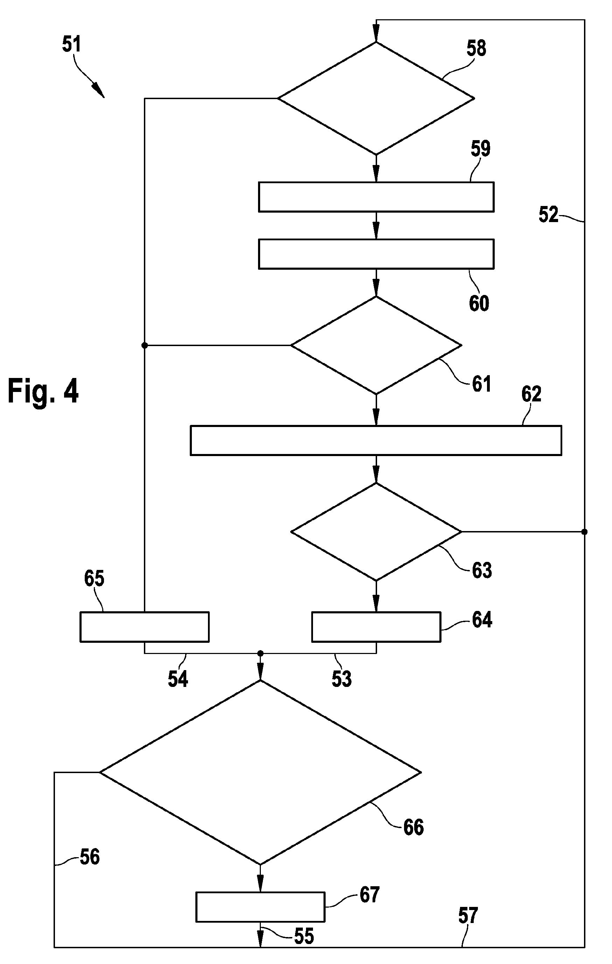

Fig. 4 zeigt ein Flussdiagramm 51 mit einer zyklischen Schleife 52. Die zyklische Schleife 52 weist zwei parallele Zweige 53 und 54 und seriell dazu zwei weitere parallele Zweige 55 und 56 sowie einen Rückführzweig 57 auf. Der erste parallele Zweig 53 weist drei Verzweigungsschritte 58, 61 und 63 und vier Operationsschritte 59, 60, 62 und 64 auf. In dem ersten Verzweigungsschritt 58 wird abgefragt, ob die Umgebungstemperatur unterhalb einer vorgebbaren Temperatur liegt, das bedeutet, ob die Linsenheizung eingeschaltet ist. Die vorgebbare Temperatur liegt idealerweise nahe dem Gefrierpunkt. Ist diese Bedingung erfüllt, so werden in dem ersten Operationsschritt 59 erste Werte, die eine Wahrscheinlichkeit für ein Vorhandensein von Objekten innerhalb eines vorgebbaren Erfassungsteilbereiches des Abstandssensors repräsentieren, normiert und aus diesen ersten normierten Werten, die eine Wahrscheinlichkeit für ein Vorhandensein von Objekten innerhalb eines vorgebbaren Erfassungsteilbereiches des Abstandssensors repräsentieren, ein Maximum ermittelt. In dem zweiten Operationsschritt 60 wird das Maximum asynchron mit einem Zeitfilter gefiltert. Danach wird in dem Verzweigungsschritt 61 abgefragt, ob das Maximum kleiner als ein erster vorgebbarer Schwellwert ist. Ist dies der Fall, so wird zu dem dritten Operationsschritt 62 geführt.

In dem dritten Operationsschritt 62 wird ein zweiter Wert, der eine Streckenlänge repräsentiert, aktualisiert. Das bedeutet, dass der zweite Wert um einen Summand erhöht wird, der sich als Produkt aus der Geschwindigkeit des Kraftfahrzeuges 31 und des Schleifenzeitwertes ergibt. In dem dritten Verzweigungsschritt 63 wird abgefragt, ob der aktualisierte zweite Wert größer ist als ein zweiter vorgebbare Schwellwert. Ist dies der Fall, so wird in dem vierten Operationsschritt 64 das eine Blindheit anzeigende Zustandsbit gesetzt.

Der zweite parallele Zweig 54 weist einen fünften Operationsschritt 65 auf. In dem fünften Operationsschritt 65 wird der zweite Wert, der eine Strecke ab dem Vergleich des Maximums mit dem ersten vorgebbaren Schwellwert repräsentiert, auf Null gesetzt. Ist in dem ersten Verzweigungsschritt 58 die Außentemperatur höher als eine vorgebbare Temperatur, so wird auf den fünften Operationsschritt 65 geführt. Ist in dem zweiten Verzweigungsschritt 61 das Maximum größer als die erste vorgebbare Schwelle, so wird ebenfalls auf den fünften Operationsschritt 65 geführt und der zweite Wert, der eine Strecke ab dem Vergleich des Maximums mit dem ersten vorgebbaren Schwellwert repräsentiert, auf Null gesetzt. Von dem vierten Operationsschritt 64 und dem fünften Operationsschritt 65 wird auf einen vierten Verzweigungsschritt 66 geführt. Der dritte parallele Zweig 55 weist den vierten Verzweigungsschritt 66 und einen sechsten Operationsschritt 67 auf. In dem vierten Verzweigungsschritt 66 wird abgefragt, ob ein Zielobjekt messbar ist, ob die Linsenheizung 21 ausgeschaltet ist oder ob Rücksetzbedingungen bereits vorhandener Verfahren zur Zustandserkennung des Abstandssensors 1 erfüllt sind. Ist eine der Bedingungen erfüllt, so wird das eine Blindheit anzeigende Zustandsbit in dem sechsten Operationsschritt 67 zurückgesetzt und von dem sechsten Operationsschritt 67 aus über die Rückführschleife 57 wieder auf den ersten Verzweigungsschritt 58 geführt. Ist in dem vierten Verzweigungsschritt 66 keine der Bedingungen erfüllt, so wird über den vierten parallelen Zweig 56 und die Rückführschleife 57 auf den ersten Verzweigungsschritt 58 geführt und die Schleife 52 neu gestartet.

## Patentansprüche

1. Verfahren zur Zustandserkennung eines an einem Kraftfahrzeug (31) angeordneten Abstandssensors (1) mit einem Prozessor (10) und einem Speicher (11) zur Abspeicherung von ersten Werten, die Wahrscheinlichkeiten für ein Vorhandensein von Objekten (33) innerhalb eines Erfassungsbereiches (34) des Abstandssensors (1) repräsentieren, wobei sich die Wahrscheinlichkeiten aus Likelihood Quotienten ergeben, deren Zähler mit geschätzten Wahrscheinlichkeiten über ankommende Signale besetzt sind, die unter der Hypothese gemessen sind, dass reale Objekte vorhanden sind und deren Nenner mit weiteren geschätzten Wahrscheinlichkeiten über ankommende Signale besetzt sind, die unter der Hypothese gemessen sind, dass keine realen Objekte vorhanden sind, und einem Geschwindigkeitsregler (13), mittels dessen die Geschwindigkeit des Kraftfahrzeugs (31) regelbar ist, mit folgenden Verfahrensschritten:
- aus ersten Werten, die Wahrscheinlichkeiten für ein Vorhandensein von Objekten (33) innerhalb eines vorgebbaren Erfassungsteilbereiches (39) des Abstandssensors (1) repräsentieren, wird ein Maximum ermittelt,
- das Maximum wird mit einem ersten vorgebbaren Schwellwert verglichen und
- abhängig von dem Vergleich wird ein eine Blindheit anzeigendes Zustandsbit gesetzt.

2. Verfahren nach Anspruch 1, **gekennzeichnet durch** folgenden Verfahrensschritt:
- zusätzlich abhängig von einer eingeschalteten Linsenheizung (21) wird das Zustandsbit gesetzt.

3. Verfahren nach Anspruch 1, **dadurch gekennzeichnet, dass** der vorgebbare Erfassungsteilbereich (39) in einem Abstand zwischen 60 und 300 Metern, in vorteilhafter Weise zwischen 80 und 250 Metern, insbesondere in einem Abstand von 100 und 200 Metern zum geregelten Kraftfahrzeug liegt.

4. Verfahren nach Anspruch 1, wobei ein zweiter Wert abgespeichert wird, der eine Strecke ab dem Vergleich des Maximums mit dem ersten vorgebbaren Schwellwert repräsentiert, mit folgenden Verfahrensschritten:
- der zweite Wert, der eine Strecke ab dem Vergleich des Maximums mit dem ersten vorgebbaren Schwellwert repräsentiert, wird zyklisch aktualisiert, indem der zweite Wert um einen Summand erhöht wird, der sich als Produkt aus der Geschwindigkeit des Kraftfahrzeugs (31) und eines Schleifenzeitwertes ergibt,
- der zyklisch aktualisierte zweite Wert, der eine Strecke ab dem Vergleich des Maximums mit dem ersten vorgebbaren Schwellwert repräsentiert, wird mit einem zweiten vorgebbaren Schwellwert verglichen und
- abhängig von den Vergleichen wird ein eine Blindheit anzeigendes Zustandsbit gesetzt.

5. Verfahren nach einem oder mehreren der vorhergehenden Ansprüche 1 - 4, **gekennzeichnet durch** folgenden Verfahrensschritt:
- das Maximum wird asynchron zeitgefiltert.

6. Verfahren nach einem oder mehreren der vorhergehenden Ansprüche 1 - 5, **gekennzeichnet durch** folgenden Verfahrensschritt:
- abhängig von dem Zustandsbit wird der Geschwindigkeitsregler (13) geschaltet.

7. Verfahren nach einem oder mehreren der vorhergehenden Ansprüche 1 - 6, **gekennzeichnet durch** folgenden Verfahrensschritt:
- abhängig von dem Zustandsbit wird eine Anzeigeeinrichtung geschaltet.

8. Verfahren nach einem oder mehreren der vorhergehenden Ansprüche 1 - 7, **gekennzeichnet durch** folgenden Verfahrensschritt:
- abhängig von einem erfassten Zielobjekt wird das Zustandsbit zurückgesetzt.

9. Verfahren nach Anspruch 2, **gekennzeichnet durch** folgenden Verfahrensschritt:
- abhängig von einem Ausschalten der Linsenheizung (21) wird das Zustandsbit zurückgesetzt.

10. Vorrichtung zur Zustandserkennung eines an einem Kraftfahrzeug (31) angeordneten Abstandssensors (1) mit einem Prozessor (10) und einem Speicher (11) zur Abspeicherung von ersten Werten, die Wahrscheinlichkeiten für ein Vorhandensein von Objekten (33) innerhalb eines Erfassungsbereiches (34) des Abstandssensors (1) repräsentieren, wobei sich die Wahrscheinlichkeiten aus Likelihood Quotienten ergeben, deren Zähler mit geschätzten Wahrscheinlichkeiten über ankommende Signale besetzt sind, die unter der Hypothese gemessen sind, dass reale Objekte vorhanden sind, und deren Nenner mit weiteren geschätzten Wahrscheinlichkeiten über ankommende Signale besetzt sind, die unter der Hypothese gemessen sind, dass keine realen Objekte vorhanden sind, und einem Geschwindigkeitsregler (13), mittels dessen die Geschwindigkeit des Kraftfahrzeugs (31) regelbar ist, **dadurch gekennzeichnet, dass** aus ersten Werten, die Wahrscheinlichkeiten für ein Vorhandensein von Objekten (33) innerhalb eines vorgebbaren Erfassungsteilbereiches (39) des Abstandssensors (1) repräsentieren, mittels des Prozessors (10) ein Maximum ermittelt, das Maximum mit einem ersten vorgebbaren Schwellwert mittels des Prozessors (10) verglichen und abhängig von dem Vergleich ein eine Blindheit anzeigendes Zustandsbitmittels des Prozessors (10) gesetzt wird.

## Claims

1. Method for detecting the status of a distance sensor (1) arranged on a motor vehicle (31), with a processor (10) and a memory (11) for storing first values which represent probabilities of a presence of objects (33) within a sensing range (34) of the distance sensor (1) wherein the probabilities result from the likelihood quotients whose numerators are linked to estimated probabilities relating to incoming signals, which probabilities are measured according to the hypothesis that real objects are present and their denominators are linked to further estimated probabilities relating to incoming signals, which probabilities are measured according to the hypothesis that no real objects are present, and a cruise controller (13) by means of which the speed of the motor vehicle (31) can be regulated, having the following method steps:
- a maximum is determined from first values which represent probabilities of a presence of objects (33) within a predefinable sensing partial range (39) of the distance sensor (1),
- the maximum is compared with a first predefinable threshold value, and
- a status bit which indicates blindness is set as a function of the comparison.

2. Method according to Claim 1, **characterized by** the following method step:
- the status bit is set additionally as a function of a switched-on lens heater (21).

3. Method according to Claim 1, **characterized in that** the predefinable sensing partial range (39) is located at a distance between 60 and 300 m, advantageously between 80 and 250 m, in particular at a distance of 100 and 200 m, from the regulated motor vehicle.

4. Method according to Claim 1, wherein a second value is stored which represents a distance from the comparison of the maximum with the first predefinable threshold value, having the following method steps:
- the second value which represents a distance from the comparison of the maximum with the first predefinable threshold value is updated cyclically by increasing the second value by a summand which is a product of the speed of the motor vehicle (31) and of a grinding time value,
- the cyclically updated second value which represents a distance from the comparison of the maximum to the first predefinable threshold value is compared with a second predefinable threshold value, and
- a status bit which indicates blindness is set as a function of the comparisons.

5. Method according to one or more of the preceding Claims 1-4, **characterized by** the following method step:
- the maximum is time-filtered asynchronously.

6. Method according to one or more of the preceding Claims 1-5, **characterized by** the following method step:
- the cruise controller (13) is switched as a function of the status bit.

7. Method according to one or more of the preceding Claims 1-6, **characterized by** the following method step:
- a display device is switched as a function of the status bit.

8. Method according to one or more of the preceding Claims 1-7, **characterized by** the following method step:
- the status bit is reset as a function of a detected target object.

9. Method according to Claim 2, **characterized by** the following method step:
- the status bit is reset as a function of switching off of the lens heater (21).

10. Device for detecting the status of a distance sensor (1) arranged on a motor vehicle (31), with a processor (10) and a memory (11) for storing first values which represent probabilities of a presence of objects (33) within a sensing range (34) of the distance sensor (1) wherein the probabilities result from the likelihood quotients whose numerators are linked to estimated probabilities relating to incoming signals, which probabilities are measured according to the hypothesis that real objects are present and their denominators are linked to further estimated probabilities relating to incoming signals, which probabilities are measured according to the hypothesis that no real objects are present, and a cruise controller (13) by means of which the speed of the motor vehicle (31) can be regulated, **characterized in that** a maximum is determined by means of the processor (10) from first values which represent probabilities of a presence of objects (33) within a predefinable sensing partial range (39) of the distance sensor (1), and the maximum is compared with a first predefinable threshold value by means of the processor (10) and a status bit means, indicating blindness, of the processor (10), is set as a function of the comparison.

## Revendications

1. Procédé de reconnaissance d'état d'un capteur de distance (1) disposé sur un véhicule automobile (31) au moyen d'un processeur (10) et d'une mémoire (11) pour enregistrer des premières valeurs qui représentent des probabilités de présence d'objets (33) dans une zone de détection (34) du capteur de distance (1), dans lequel les probabilités résultent de quotients de probabilité dont les compteurs sont occupés par des probabilités estimées sur des signaux entrants qui sont mesurés avec pour hypothèse que des objets réels sont présents et dont les dénominateurs sont occupés par d'autres probabilités estimées sur des signaux entrants qui sont mesurés avec pour hypothèse qu'aucun objet réel n'est présent, et d'un régulateur de vitesse (13), au moyen duquel la vitesse du véhicule automobile (31) est réglable, comportant les étapes opératoires suivantes :
- à partir de premières valeurs qui représentent les probabilités de présence d'objets (33) dans une zone partielle prédéfinissable de détection (39) du capteur de distance (1), un maximum est déterminé,
- le maximum est comparé à une première valeur seuil prédéfinissable et,
- en fonction de la comparaison, un bit d'état affichant une absence de vision est établi.

2. Procédé selon la revendication 1, **caractérisé par** l'étape opératoire suivante :
- le bit d'état est établi en outre en fonction d'un chauffage de lentille activé (21).

3. Procédé selon la revendication 1, **caractérisé en ce que** la zone partielle de détection prédéfinissable (39) se situe à une distance de 60 à 300 mètres, avantageusement de 80 à 250 mètres, en particulier à une distance de 100 à 200 mètres du véhicule automobile régulé.

4. Procédé selon la revendication 1, dans lequel est enregistrée une seconde valeur qui représente un trajet à partir de la comparaison du maximum avec la première valeur seuil prédéfinissable, comportant les étapes opératoires suivantes :
- la seconde valeur qui représente un trajet à partir de la comparaison du maximum avec la première valeur seuil prédéfinissable est actualisée cycliquement par le fait que la seconde valeur est augmentée à raison d'un opérande qui est obtenu en tant que produit de la vitesse du véhicule automobile (31) et d'une valeur temporelle de boucle,
- la seconde valeur actualisée cycliquement qui représente un trajet à partir de la comparaison du maximum avec la première valeur seuil prédéfinissable est comparée à une seconde valeur seuil prédéfinissable et,
- en fonction des comparaisons, un bit d'état affichant une absence de vision est établi.

5. Procédé selon une ou plusieurs des revendications précédentes 1 - 4, **caractérisé par** l'étape opératoire suivante :
- le maximum subit un filtrage temporel asynchrone.

6. Procédé selon une ou plusieurs des revendications précédentes 1 - 5, **caractérisé par** l'étape opératoire suivante :
- en fonction du bit d'état, le régulateur de vitesse (13) est commuté.

7. Procédé selon une ou plusieurs des revendications précédentes 1 - 6, **caractérisé par** l'étape opératoire suivante :
- en fonction du bit d'état, un dispositif d'affichage est commuté.

8. Procédé selon une ou plusieurs des revendications précédentes 1 - 7, **caractérisé par** l'étape opératoire suivante :
- en fonction d'un objet de destination, le bit d'état est réinitialisé.

9. Procédé selon la revendication 2, **caractérisé par** l'étape opératoire suivante :
- en fonction d'une coupure du chauffage de lentille (21), le bit d'état est réinitialisé.

10. Dispositif de reconnaissance d'état d'un capteur de distance (1) disposé dans un véhicule automobile (31), comprenant un processeur (10) et une mémoire (11) pour enregistrer des premières valeurs qui représentent des probabilités de présence d'objets (33) dans une zone de détection (34) du capteur de distance (1), les probabilités résultant de quotients de probabilité, dont les compteurs sont occupés par des probabilités estimées sur des signaux entrants qui sont mesurés avec pour hypothèse que des objets réels sont présents et dont les dénominateurs sont occupés par d'autres probabilités estimées sur des signaux entrants qui sont mesurés avec pour hypothèse qu'aucun objet réel n'est présent, et un régulateur de vitesse (13) au moyen duquel la vitesse du véhicule automobile (31) est réglable, **caractérisé en ce que**, à partir de premières valeurs qui représentent des probabilités de présence d'objets (33) dans une zone de détection prédéfinissable (39) du capteur de distance (1), au moyen du processeur (10), un maximum est déterminé, le maximum est comparé à une première valeur seuil prédéfinissable au moyen du processeur (10) et, en fonction de la comparaison, un moyen de bit d'état du processeur (10) indiquant une absence de vision est établi.
